(19) Europäisches Patentamt / European Patent Office / Office européen des brevets

(11) **EP 2 975 850 A1**

(12) **EUROPEAN PATENT APPLICATION**

(43) Date of publication:
**20.01.2016   Bulletin 2016/03**

(51) Int Cl.:
*H04N 19/513* (2014.01)        *H04N 19/162* (2014.01)
*H04N 19/553* (2014.01)        *G06T 7/20* (2006.01)
*H04N 5/14* (2006.01)

(21) Application number: **14306173.7**

(22) Date of filing: **18.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Robert, Philippe**
**35576 Cesson-Sévigné (FR)**
• **Crivelli, Tomas Enrique**
**35576 Cesson-Sévigné (FR)**

• **Fradet, Matthieu**
**35576 Cesson-Sévigné (FR)**
• **Viellard, Thierry**
**35576 Cesson-Sévigné (FR)**
• **Conze, Pierre-Henri**
**35576 Cesson-Sévigné (FR)**
• **Newson, Alasdair**
**35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Method for correcting motion estimation between at least two frames of a video sequence, corresponding device, computer program and non-transitory computer-readable medium**

(57)     The invention relates to a method for correcting a motion estimation between at least two frames of a video sequence, from at least one input motion field between said at least two frames.

According to the invention, said method comprises also:
- from said input motion field and said at least two frames, determining (11) at least two types of data, each corresponding to a distinct quality assessment of said input motion field,
- detecting (12) at least one error in said input motion field, by analysing simultaneously said two frames together with at least two pieces of information representing respectively said at least two types of data, and delivering at least one piece of information identifying said error in said input motion field,
- correcting (13) said input motion field by taking into account said at least one piece of information identifying an error in said input motion field.

Fig. 1

**Description**

**1. Technical Field**

The present invention relates generally to the field of video editing. More precisely, the invention relates to a method and a device for processing a video sequence comprising multiple frames, also called images.
More precisely, the invention concerns the estimation of dense motion fields and trajectories in video sequence.

**2. Background Art**

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.
In image processing, the temporal filling method, whose principle is to take advantage of the motion of a camera and/or of the motion of different objects in the video sequence, is known. This method implements motion compensation.
Due to the motion, it is possible that an area hidden in a first frame is visible in another frame (past or future frame) of the video sequence. The motion estimation can helps to retrieve the missing information about the area hidden by an object/character at an instant t of a video sequence.
However, it is also possible that despite a motion in the video sequence, some areas may never be seen or discovered because of the immobility of certain objects. In other words, for example, the combination of the lack of camera motion and the lack of object motion in the image results in that the region hidden behind the object is unknown during the entire video sequence.
To overcome this drawback, it is possible to manually create from scratch the pixels associated with the unknown region or to determined them by spatial inpainting, from the known pixels surrounding the pixels of the unknown region as proposed by A. Criminisi et al. in « Region filling and object removal by exemplar-based image inpainting » (IEEE Transactions on Image Processing, September 2004, volume 13, Issue 9, pages 1200-1212).
Such a determination/creation of the pixels associated with the unknown region helps to enhance the motion field between two frames, which is obtained with a classical motion estimator. Indeed, the motion vectors delivered by a classical motion estimator, implemented from at least two images, associate only the "visible" pixels in both images, for example a pixel of an object of the visible background in one image with a visible pixel in the foreground of the other image and are thus not suited to define the motion of an unknown region.
However the automated use of filling techniques such as the temporal filling or the spatial filling, also known as spatial inpainting, delivers sequences of frames, which often contain errors. Indeed, for such an automatic implementation, it is impossible to guarantee exact motion estimation for all cases.
As a consequence, for some applications, user interaction can be considered in order to improve automatic motion estimation.
For example, in the case of image interpolation, some interactive tools have been proposed to edit and improve dense image correspondence.
F. Klose and al. ("Flowlab - an interactive tool for editing dense image correspondences" in Conference for Visual Media Production, CVMP 16-17 November 2011, pages 59-66) proposed, for example, local polygon-based editing operations respectively called "Outliers removal" consisting in implementing a median filtering of the motion field applied to a polygonal region defined by the user, and "Region mapping" consisting, for the user, in first selecting a polygon in one frame, this polygon being then automatically mapped onto the other image, the correspondence being then automatically refined starting from a projective transformation of the selection, said transformation being specified by a user using a bounding box with four control points. Then, quality assessment is achieved via warping each image to create an intermediate one. Impairments in juxtaposition highlight the motion errors.
In K. Ruhl et al. ("Improving dense image correspondence estimation with interactive user guidance", Proceedings of the 20th ACM international conference on Multimedia, 1129-1132), an iterative method for correcting the motion estimation is implemented by interleaving user operations between each iteration, so that information introduced by the user is taken into account by the user in a refinement process. Such user operations corresponds for example to the definition of an offset prior for a circular region of a source image to a target image, and the definition of local data weighting which increases or decreases regularization on a circular area.
It has to be noted that the above semi-automatic motion estimation methods, implementing user interactions are not well-adapted for the motion estimation of a whole video sequence, where numerous motion fields are involved. Indeed, such methods are consuming methods in terms of time but also in terms of money required to reward the worked hours of the person responsible for such manual or semi-automatic processing, such person being called image technician or operator.
Thus, there remains a significant need for enhancing the motion estimation to deliver rapidly a dense and reliable motion field.

## 3. Summary Of Invention

The invention proposes a new solution as a method for correcting a motion estimation between at least two frames of a video sequence, from at least one input motion field between said at least two frames.

According to the invention, said method comprises also:

- from said at least one input motion field and said at least two frames, determining at least two types of data, each corresponding to a distinct quality assessment of said at least one input motion field,
- detecting at least one error in said at least one input motion field, by analysing simultaneously said two frames together with at least two pieces of information representing respectively said at least two types of data, and delivering at least one piece of information identifying said error in said at least one input motion field,
- correcting said at least one input motion field by taking into account said at least one piece of information identifying an error in said at least one input motion field.

The correction of motion estimation according to the invention is therefore based on the simultaneous consideration of the at least one input motion field and at least two types of data derived from the at least one input motion field.

Taking into account simultaneously the considered two frames combined with the at least two types of data, permits to view and detect errors in the at least one input motion field thanks to at least two distinct angles of analysis (analysis tracks) corresponding respectively to each types of data.

Thus, in comparison with the prior art it is possible to detect error(s) more easily and more rapidly in the at least one input motion field with reliability, since the at least two types of data derived from the at least one input motion field are used in synergy.

Such a detecting can be run automatically or can involve a user interaction as will be detailed in the following.

It has to be noted that the expression "at least two pieces of information representing respectively said at least two types of data" is used to designate an image (colorized or not), a table, an indicator of which the colour, the texture or the form indicates for example that a "tri-dimensional" point (in other words a point defined by its tri-dimensional coordinates (x, y, z)) of a scene captured by the video sequence, or a region, is visible in one frame and occluded in the other frame, and on the contrary that such a point is visible in both frames.

Such an indicator could also indicates that the motion vector associated with a "tri-dimensional" point is a "confident" motion vector or on the contrary presents a value of confidence lower than a predetermined threshold.

Two types of data derived from the motion field can be represented by two different types of pieces of information, for example an image can be used for a first type of data and a table can be used for a second type of data.

More precisely, said at least two types of data belong to the group comprising at least:

- a dense motion map (for example represented as a "colorized motion field map"),
- an occlusion map,
- a confidence map of said at least one input motion field,
- a motion compensated frame difference map (also called "motion-compensated color difference map"),
- a color gain map,
- a color-gain-compensated frame map,
- a color-gain-compensated color difference map.

In other words, a "type of data" corresponds for example to the category of data called: "occlusion map", such type (or category) of data comprising all the "occlusion data" derived from the considered motion field.

Thus considering a frame, the type of data named "occlusion map" comprises as many occlusion data as there are pixels in the considered frame.

Thus, the proposed invention implements for example an analysing of two frames of a video sequence combined with an analysing of the dense motion map and of the occlusion map derived from the at least one input motion field between these two frames.

Such a dense motion map and such occlusion map can help to detect errors, which can be only easily detected by a simultaneous comparison of these at least four elements consisting of the two frames, the dense motion map and the occlusion map. Indeed, such a comparison permits to detect errors due to inconsistencies between these at least four elements when they are considered simultaneously.

In the prior art the display of only one data derived from the input motion field does not permits to detect all the error, which can be identified according to the invention. Indeed, in the prior art the detection of error is classically limited to only one angle of analysis and does not permit to detect efficiently and quickly the motion field errors.

According to a particular aspect, a preliminary motion estimation delivering said at least one input motion field corresponding to both a forward and a backward motion fields between said at least two frames is implemented.

It has to be noted that such at least one input motion field can be obtained from a preliminary motion estimation also implemented by the device of the present invention, or can be received from another device, which permits to keep the use of the classical motion estimation devices and combine them with the device for correcting a motion estimation according to the present invention.

Considering two frames called A and B respectively, such at least one input motion field can be limited to only one motion field corresponding to the motion filed from frame A to frame B (forward motion field) or the motion field from frame B to frame A (backward motion field), or can correspond to both motion fields.

In this particular case considering both motion fields, the error detection is implemented according to the present invention, by analysing for example a first dense motion map using the motion field from A to frame B and a second dense motion map using the motion field from B to A.

Thus, in this case, the "two types of data" according to the invention can correspond to two dense motion maps, two occlusion maps, two confidence maps, two motion-compensated color difference maps, two color gain maps, each of two considered maps for each frame A or B (i.e. considering the motion from A to B on the one hand, or the motion from B to A on the other and). Thus, starting from at least one input motion field corresponding to both a forward and a backward motion fields between at least two frames A and B, two types of data, each for one motion field, are combined with the two frames for detecting more easily errors in the motion field delivered by a classical motion estimation.

According to a particular embodiment, said analysing comprises at least:

- obtaining an analysing image formed by said two frames together with said at least two pieces of information representing respectively said at least two types of data,
- displaying said analysing image,
- receiving a piece of information representing a location of at least one pixel in one of said two frames of said analysing image, and displaying simultaneously at least one pointer and said piece of information representing a pixel location, both superposed on said analysing image,
- receiving said at least one piece of information identifying said error in said at least one input motion field obtained by taking into account said at least one pointer and said piece of information representing a pixel location, both superposed on said analysing image.

Said embodiment involves an interaction with the user, also called operator, using a user interface where an analysing image formed by said two frames together with said at least two pieces of information representing respectively said at least two types of data is displayed.

The operator enters the piece of information representing a location of at least one pixel in one of the two frames of the analysing image.

The piece of information representing a location of at least one pixel in one of the two frames corresponds for example to an arrow (or an highlighted point, or any pointer with a specific form or texture) moved by the operator thanks to a computer mouse or roller ball, a digital pad or screen.

When the operator moves the piece of information representing a location of at least one pixel in frame A, i.e for example an arrow, at least one pointer is automatically displayed and moved simultaneously by superposition on said analysing image.

In other words, such at least one pointer can correspond to a second arrow in the other frame B designating the corresponding at least one "tri-dimensional" point displaced by its estimated motion vector in the other frame, and/or to the same location of at least one pixel in the piece of information, for example an image or a table, representing the two types of data derived from the motion field from A to B (in other words as much pointers as there are displayed images can be used to help the operator's analysis, such pointers moving according to the operator's motion using a computer mouse or roller ball, a digital pad or screen).

Advantageously, it can be noted that when the piece of information representing a type of data is an indicator of which the colour, the texture or the form indicates for example that a "tri-dimensional" point (in other words a point of the scene defined by its tri-dimensional coordinates (x, y, z)) of a scene captured by the video sequence, or a region, is visible in one frame and occluded in the other frame, and on the contrary that is visible in both frames.

Thanks to such an indicator, it is possible to display more types of data since the size of this indicator is smaller than an image or a table used for representing a type of data. Thus, the use of such indicator representing a data derived from an input motion field can help to display more derived data (for example two images representing two types of data and the indicator representing another type of data) to optimize the error detection.

Moreover, if the piece of information representing a type of data is an indicator, when the operator moves the piece of information representing a location of at least one pixel in frame A, the colour or texture or form, of said indicator depends on the pixel pointed by said piece of information representing a location of at least one pixel in frame A. Thus, the indicator's appearance changes dynamically as a function of the operator's motion on the computer mouse or roller ball, or the digital pad or screen, which makes easier the analysis of the operator, who can detect an error in real time.

The number of displayed derived data depends on the display size.

Thanks to the analysing image and the superposed pointers and piece of information representing a pixel location, the operator is able to identify an error and thus enters a pieces of information identifying said error.

For example, when the piece of information representing a type of data is an indicator of which the colour indicates for example that a "tri-dimensional" point of the scene is visible in one frame and occluded in the other frame, whereas in reality it is the opposite, the operator changes the color of the indicator to identify that the motion vector associated with the "tri-dimensional" of frame A is erroneous for that "tri-dimensional" point located by the piece of information representing the location of the corresponding pixel in frame A (i.e. for example an arrow).

According to a particular aspect, said piece of information representing a location of at least one pixel defines an area comprising a group of pixels in one of said two frames, called a selected frame, and wherein said displaying simultaneously at least one pointer and said piece of information representing a pixel location, both superposed on said analysing image, displays also by superposition, a corresponding contour or a corresponding predetermined texture of said area on the other frame and/or on said at least two pieces of information representing respectively said at least two types of data.

Such aspect permits the operator to select directly the wrong area in one of the frames or in the piece of information, for example an image or a table, representing the two types of data derived from the motion field. This latter option is useful in particular when the error in the motion field is a motion discontinuity corresponding to the disappearance of the boundary of an object.

Such area to be corrected can be better identified in one of the color frames A or B. for example the area is highlighted in one frame by an operator using a mouse or a roller ball, a digital pad or screen.

According to a variant of this particular aspect, said method comprises propagating a corresponding contour or texture of said area in at least two other frames of said video sequence, and displaying said selected frame and said at least two other frames of said video sequence together with their respective contour or texture.

Indeed, the area of interest can be highlighted in one of the frames A or B, a frame corresponding to a selected time instant in the video sequence, and then this area can be propagated and adjusted in the other frames of the video sequence by inpainting for example, or manually by the operator, who can selects one point (or several) in the selected area of frame A and its corresponding point (points respectively) in frame B, the motion field of the whole selected area being interpolated from these operator's data.

In other words, the piece of information identifying said error in said input motion field corresponds to a correspondence between points of frames A and B selected manually by the operator.

According to another variant of this particular aspect, said propagating implements a bilinear interpolation or, starting from a pixel presenting a predetermined texture of said selected frame of said two frames or starting from a contour pixel of said selected frame of said two frames, by assigning respectively said predetermined texture or a contour label to a pixel close to a corresponding point in the other frame of said two frames.

According to another variant of this particular aspect, said obtaining an analysing image inserts at least one additional piece of information representing a dependency between at least one of said two other data and one of said two frames.

Thus, it is easier for the operator to understand from which motion field the pieces of information representing at least two types of data are derived.

For example, the motion estimation is limited to only one motion field the motion field from frame A to frame B, and thus the pieces of information representing at least two types of data are derived from the motion field from frame A to frame B. To illustrate this aspect, the frame A and the images or tables representing at least two types of data are derived from the motion field from frame A to frame B are framed with the same color in the analysing image, for example green, whereas frame B is framed with another distinct color blue.

According to another example, both motion fields from frame A to frame B and from frame B to frame A are delivered by a previous motion estimation and the analysing image comprises frames A and B and the two occlusion maps for each frame A or B (i.e. considering the motion from A to B on the one hand, or the motion from B to A on the other and). To illustrate such dependency, frame A and the corresponding occlusion map (i.e. considering the motion from A to B) are framed in green, whereas frame B and the corresponding occlusion map (i.e. considering the motion from B to A) are framed in blue.

Optionally, the displaying a piece of information representing a location of at least one pixel comprises modifying said piece of information representing a location of at least one pixel when its superposition on said analysing image hides a point of interest of said analysing image.

For example in the case of the use of a mouse, a right click while moving the piece of information representing a location of at least one pixel in the current frame provides access to the various signs (arrows, circle, triangle, square...) from which a new one can be selected.

According to a particular aspect, said at least two frames form a pair of frames, said pair of frames comprising two successive frames of said video sequence, or said pair of frames comprising a reference frame and one other frame of said video sequence.

In other words, in the one hand only the motion field between two successive frames is considered which is interesting when considering a video sequence with lots of actions making two successive frames really different, or on the other hand the motion field which links a reference frame to other frames of the sequence can be considered.

In particular, said determining at least two types of data corresponding to a quality assessment of said at least one input motion field is performed for all pairs of frames that can be formed in said video sequence, delivering for each pair a quality value of the at least one input motion field, said pairs of frames being then ordered from the one presenting the lowest quality value to the one presenting the highest quality value, and wherein said detecting and correcting are applied at least first on the pair of frames presenting the lowest quality value.

For example, the quality value corresponds to the motion confidence and can be derived simultaneously with the type of data corresponding to a confidence map.

Thus, by correcting the motion field linking the pair of frames presenting the lowest quality value, it is possible to improve quickly the overall quality of the video sequence since the operator can focus on the main errors in the motion field(s) delivered by the classical motion estimation applied on the considered video sequence, implemented by the device according to the invention or implemented by a classical motion estimation device.

According to another aspect, the method according to the invention comprises merging said type of data corresponding to an occlusion map and said type of data corresponding to a confidence map, delivering a merged data corresponding to a "confidence/occlusion" map. Such aspect permits to increase the number of types of data derived from the motion field(s) between two frames than can be displayed to the operator.

Another aspect of the disclosure concerns a device for correcting a motion estimation between at least two frames of a video sequence from at least one input motion field between said at least two frames,

According to the invention, said device comprises also:

- a module for determining at least two types of data, each corresponding to a distinct quality assessment of said at least one input motion field, from said at least one input motion field and said at least two frames.

- a module for detecting at least one error in said at least one input motion field, comprising a module for analysing simultaneously said two frames together with at least two pieces of information representing respectively said at least two types of data, and delivering at least one piece of information identifying said error in said at least one input motion field,

- a module for correcting said at least one input motion field by taking into account said at least one piece of information identifying an error in said at least one input motion field.

Such a device for correcting a motion estimation between at least two frames of a video sequence from at least one input motion field between said at least two frames. It is for example integrated in a phone terminal, a computer, a tablet, etc..

Of course, this device will comprise the different features relating to the method for correcting a motion estimation between at least two frames of a video sequence from at least one input motion field between said at least two frames described and, which can be taken together or separately. Thus, the features and advantages of this device are the same as those of the method for correcting a motion estimation between at least two frames of a video sequence from at least one input motion field between said at least two frames. Therefore, they are not described in more detail.

The disclosure further relates to a computer program product downloadable from a communication network and/or recorded on a medium readable by computer and/or executable by a processor, comprising program code instructions for implementing said method sorting a plurality of images of a database according, and/or for implementing the steps of the method for correcting a motion estimation between at least two frames of a video sequence from at least one input motion field between said at least two frames.

The disclosure also relates to a non-transitory computer-readable medium comprising a computer program product recorded thereon and capable of being run by a processor, including program code instructions for implementing said method for correcting a motion estimation between at least two frames of a video sequence from at least one input motion field between said at least two frames.

Although examples of the invention have been described hereinabove in relation with a limited number of embodiments, those skilled in the art, when reading this description, will understand that other embodiments can be imagined without leaving the scope of this invention.

In particular, while not explicitly described, the present embodiments may be employed in any combination or sub-combination.

As will be appreciated by one skilled in the art, aspects of the present principles can be embodied as a device, method or computer readable medium. Accordingly, aspects of the present principles can take the form of an entirely hardware embodiment, an entirely software embodiment (including firmware, resident software, micro-code, and so forth), or an embodiment combining software and hardware aspects than can all generally be referred herein as a "circuit", "module", or "device". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

Moreover, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo-code, and the like represent various processes which may be substantially represented in computer readable storage media and so executed by a computer or processor, whether or not such computer or processor is explicitly shown.

## 4. **Brief Description of Drawings**

Other characteristics and advantages of embodiments of the invention shall appear when reading the following description, provided by way of a non-restricted and indicative example (all of the embodiments of the invention are not limited to the characteristics and advantages of the embodiments described hereinafter), and the annexed drawings, wherein:

- Figure 1 shows the steps of the method according to an embodiment of the invention;
- Figures 2 to 4 illustrates different examples of analysing images used for correcting a motion estimation according to an embodiment of the invention;
- Figure 5 illustrates the case where said piece of information representing a location of at least one pixel defines an area comprising a group of pixels in one of said two frames;
- Figure 6 illustrates a particular embodiment of the method according to the invention wherein the determining at least two types of data corresponding to a quality assessment of said at least one input motion field is performed for all pairs of frames that can be formed in said video sequence
- Figure 7 illustrates an example of a simplified structure of a device for correcting a motion estimation according to an embodiment of the invention.

## 5. **Description of Embodiments**

### *5.1 General Principle*

The invention, according to its different embodiments, is based on analysing simultaneously two frames of a video sequence with at least two pieces of information representing two distinct types of data derived from a motion field estimated between these two frames.

Taking into account at least four data (the two frames on the one hand and the two types of data derived from the motion field between these two frames) the detection of errors in the motion field is optimized in quality (several tracks of analysis are taken into account simultaneously), quantity (using several tracks of analysis permits to increase the number of errors which can be detected easily at a glance), and time (errors can be easily detected at a glance when taking into account at least these four data).

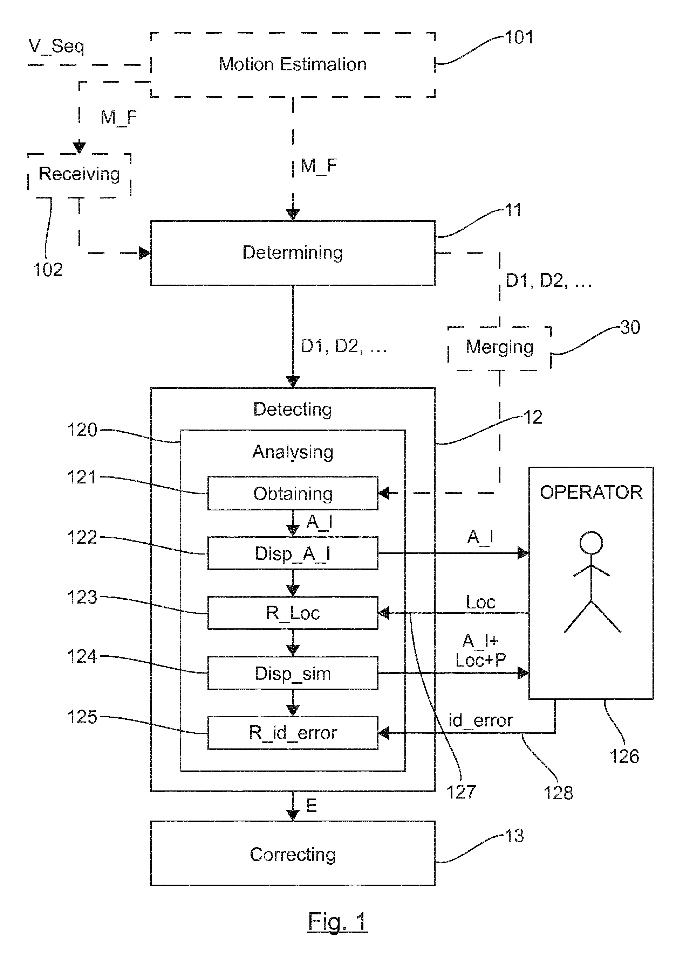

In relation with figure 1, the main steps of the method for correcting a motion estimation between at least two frames of a video sequence from at least one input motion field between said at least two frames according to the invention are detailed in the following.

First, a determining (11) of at least two types of data D1, D2, each corresponding to a distinct quality assessment of at least one input motion field M_F between two frames of a video sequence V_Seq is performed.

The at least one input motion field M_F is obtained using a preliminary automatic motion estimation (101) also implemented by the device of the present invention, or can be received (102) from another device, which permits to keep the use of the classical motion estimation devices and combine them with the device for correcting a motion estimation according to the present invention.

Advantageously, when the device of the present invention implements both the motion estimation (101) and the determining (11) a single motion estimator can be used to deliver automatically at the same time the motion field M_F and the at least two types of data D1, D2.

Considering two frames called A and B respectively, such at least one input motion field M_F can be limited to only one motion field corresponding to the 2D (two dimension) motion filed from frame A to frame B (forward motion field) or the motion field from frame B to frame A (backward motion field), or can correspond to both motion fields (forward and backward).

The availability of both a forward and a backward motion fields will allow better motion quality but this is not a mandatory requirement.

In particular, said at least two types of data D1, D2 delivered by the determining step (11) corresponds for example to:

- a dense motion map (forward and backward motion fields : for a given pair of frames (A,B), 2D motion field for pixels of frame A (respectively B) with respect to frame B (respectively A)),

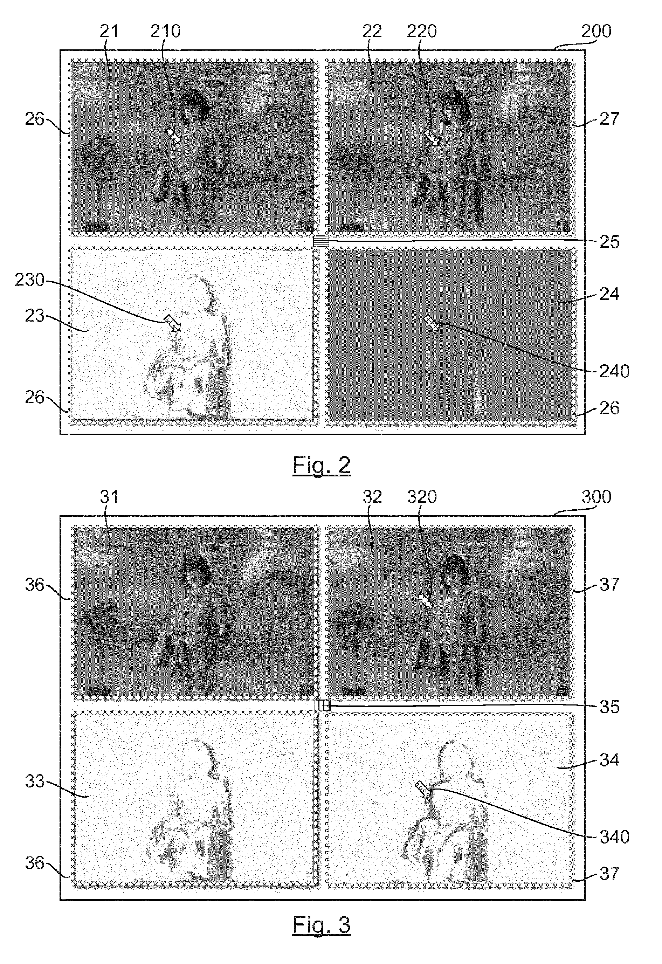

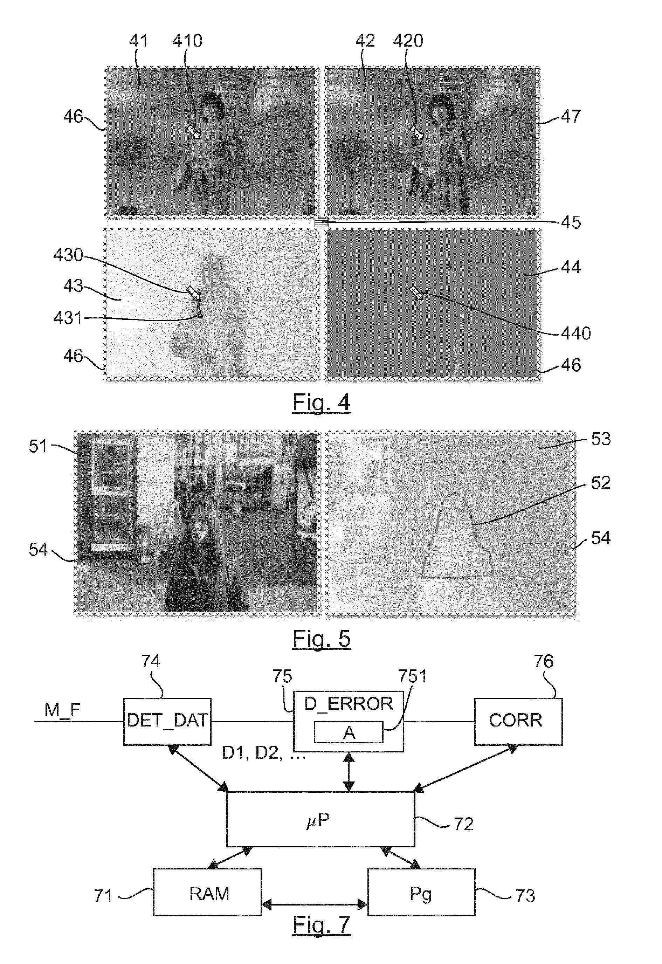

- an occlusion map forward and backward occlusion label maps : for each pixel, the label indicates if it is visible or occluded in the other frame,
- a motion compensated frame difference map (also called "motion-compensated color difference map " 24 or 44 as can be seen in figures 2 and 4 respectively),
- a color gain map (optionally forward and backward gain maps : for each pixel such maps illustrate the evolution of the color between the two frames. For example, a gain-based model can be considered where the color gain $g_{a,b}$ of pixel $x_a$ is for example a

3-component vector $\left(\boldsymbol{g}_{a,b} = \left(g_{a,b}^r, g_{a,b}^g, g_{a,b}^b\right)^T\right.$

for R, G, B components), but other models can be also considered (e.g. using gain and offset),

- a color-gain-compensated frame map, for example considering the gain-based model above cited, the color-gain-compensated frame map is obtained using the following relation for expressing the color of pixel $x_a$ in a frame and the color of the corresponding point moved at location $(x_a + d_{a,b}(x_a))$ in frame $I_b$:

$$I_a^c(x_a) = g_{a,b}^c(x_a).I_b^c\big(x_a + d_{a,b}(x_a)\big),$$

- a color-gain-compensated color difference map, for example considering the gain-based model above cited such a color-gain-compensated color difference map would correspond to the result of the following expression:

$$I_a^c(x_a) - g_{a,b}^c(x_a).I_b^c\big(x_a + d_{a,b}(x_a)\big).$$

Optionally (dashed line), said method comprises merging (130) said type of data corresponding to an occlusion map and said type of data corresponding to a confidence map, delivering a merged data corresponding to a "confidence/occlusion" map (23, 33 as can be seen respectively in figures 2, 3). Said merging (130), permits for the "visible" pixels, to provide in addition a value representing a confidence degree of the motion vector.

Such aspect permits to increase the number of types of data derived from the motion field(s) between two frames than can be displayed to the operator.

Secondly, a detecting (12) of at least one error $E$ in said at least one input motion field, by analysing (120) simultaneously said two frames together with at least two pieces of information representing respectively said at least two types of data, and delivering at least one piece of information identifying said error in said at least one input motion field.

Such a detecting (12) can be run automatically or can involve a user interaction. The embodiment represented in figure 1, involves the user interaction and comprises at least:

- obtaining (121) an analysing image A_I (200, 300, 400 as represented in figures 2 to 4) formed by said two frames together with said at least two pieces of information representing respectively said at least two types of data,
- displaying *Disp_A_I* (122) said analysing image,
- receiving *R_Loc* (123), from an operator (126) a piece of information representing a location *Loc* of at least one pixel in one of said two frames of said analysing image, and displaying (124) simultaneously at least one pointer and said piece of information representing a pixel location, both superposed on said analysing image,
- receiving (125) said at least one piece of information R_id_error identifying said error in said at least one input motion field obtained by taking into account said at least one pointer and said piece of information representing a pixel location, both superposed on said analysing image.

Said embodiment involves an interaction with the operator (126), using a user interface where an analysing image *A_I* formed by said two frames together with said at least two pieces of information representing respectively said at least two types of data D1 and D2 is displayed.

In other words, once the determining step (11) has been performed, its results are automatically and simultaneously displayed (122) and the operator can take into account them and indicates (128) that errors, which he had identified, require correction (13).

Several data (the at least two frames and the at least two data forming the analysing image can be simultaneously displayed 122 on the screen (but even more mainly depending on the display size).

Optionally, the operator can previously selects the number of displayed data and a default set of data. He can then select another displayed data for each window.

For example, the default displayed data can correspond to the first pair of frames (A, B) of the sequence and the corresponding motion-compensated color difference maps.

The operator can for example modify this default display, keeping the pair of color frames (A, B), and selecting the motion compensated frame difference Brand keeping the motion-compensated color difference maps "*A-Br*", frame *Br* being obtained as follows : each pixel of frame A is replaced by the color of the corresponding point in frame B, if a pixel of A is classified "occluded in the other frame", it is either set to "black" or it is not replaced.

If a type of data corresponding to a confidence map has been determined (11), it can guide the user in the detection of the errors in motion fields. If the operator focuses on one correspondence direction (either forward or backward), the four displayed frames can be : the two input color maps, the occlusion map, the confidence map. For example, these two maps can refer to frame "A" if analysed motion field is the one attached to frame "A" with respect to frame "B".

Motion confidence can be computed for example from motion-compensated absolute difference (the lower the better) (MCAD), or from motion inconsistency as disclosed by P. Robert and al. (*"Disparity-compensated view synthesis for 3d content correction"* in SPIE IS&T Electronic Imaging Stereoscopic Displays and Applications, 2012) or via a method grouping both for example, if confidence from MCAD and from inconsistency are expressed in a common scale, then the worst value can be selected as the final confidence value.

When occlusion data and confidence data are merged (130) in a unique map: confidence refers to motion vector quality, which permits to display both color maps and their confidence/occlusion maps at the same time.

If the operator focuses on one correspondence direction, both color maps together with one confidence/occlusion map and one motion-compensated color difference map can be displayed. For example, these two maps can refer to frame "A" if analysed motion field is the one attached to frame "A" with respect to frame "B". In this context, the operator can make the pointer move in the four displayed frames simultaneously.

Thus, the operator can choose easily the preferred displayed version using the user-interface provided by the device according to the invention.

Once data (frames A, B, D1 and D2 for example) are displayed simultaneously, the operator enters (127) a piece of information *Loc* representing a location of at least one pixel in one of the two frames of the analysing image.

Then, when the operator moves the piece of information *Loc* representing a location of at least one pixel in frame A, i.e for example an arrow, at least one pointer P is automatically displayed (124) and moved simultaneously by superposition (*A_I+Loc+P*) on said analysing image (*A_I*).

It can be useful to display forward and backward occlusion maps together with the color frames as represented in figure 3. Thus, when the user moves a pointer on one of the elements (displayed color frame or data derived from the input motion field) of an analysing image, he can see the corresponding point in the other elements of the analysing image. For example, if the user points at a pixel of color frame "A", he can see where it is in the occlusion map "A", he can also see where the corresponding point is in the other color frame "B" and in its attached occlusion map (if it is not labelled "occluded in the other map" in the occlusion map "A"). In brief, he can move the pointer looking at any of the four displayed data (frames A and B and the corresponding data which have been previously determined).

In other words, when both color frames are displayed, the operator can point at any pixel and see the corresponding point shown in the other displayed frame. He can do it on any of the two displayed frames A and B. If the selected pixel is occluded in the other frame, this information is indicated via any indicator (or sign). It can be for example a square placed in the middle of the displayed data of the analysing image that is green (respectively horizontally hatched as in figure 2) if the corresponding point is visible and red (respectively vertically hatched as in figure 2) if it is occluded.

Such superposition helps the operator to identify error. Once the operator has identified an error, he enters or sends (128) a piece of information *id_error* identifying (and/or correcting) an error in the input motion field *M_F.* Such piece of information *id_error* identifying an error can correspond to a modification of point correspondence or a modification of pixel occlusion label.

The operator can modify the correspondence or the occlusion label. For example, he clicks on the pixel with the wrong assignment. Then, if motion is wrong, he modifies the correspondence in the other frame by clicking on the right corresponding point. Or if the pixel is wrongly classified "occluded in the other frame", he can change it in "visible" and click on the corresponding point in the other frame. On the other hand, if it is wrongly classified "visible", the user can change the label in "occluded in the other frame".

Then, the device according to the invention receives *R_id_error* such piece of information *id_error* identifying an error *E* in the input motion field *M_F.*

Using the piece of information *id_error* identifying, such error *E* is then automatically corrected (13) by the device.

This user-assisted method as represented in figure 1 is thus embedded in a framework composed of three phases: first phase concerns determining (11), from said at least one input motion field and said at least two frames, at least two types of data, each corresponding to a distinct quality assessment of said at least one input motion field, the second phase corresponds to a user-assisted detecting (12) of at least one error in said at least one input motion field, and a third phase corresponds to an automatic post-processing of correcting (13) of the motion fields that take into account the operator modifications.

During the second phase, the output data *D1, D2* are displayed (122) to the operator in order to detect and correct errors. In view of the possibly large set of frames, an easy and efficient user interface is thus provided to the operator. In addition, the invention provides an automatic evaluation of the motion quality, which guide the operator in the examination of the sequence of results.

## 5.2 Description of different embodiments and variants

### 5.2.1 Analysing images

Figures 2 to 4 illustrates different examples of analysing images used for correcting a motion estimation according to an embodiment of the invention.

As already said, the number of displayed derived data depends on the display size.

In figure 2, the two color frames 21, 22 (corresponding for example to the first and the sixth frames of a video sequence) are represented on the upper row of the analysing image 200. The motion field M_F is estimated between these two color frames 21, 22 and corresponds only to the motion field from the color frame 21 to the color frame 22 (forward motion field).

Starting from such motion field M_F from the color frame 21 to the color frame 22, the confidence/occlusion map 23 and the motion-compensated frame difference map 24, both assigned (26) (i.e derived from the motion field starting from the color frame 21 to the color frame 22) to the upper left color frame 21 are determined and displayed at the bottom row of the analysing image 200.

To illustrate that the confidence/occlusion map 23 and the motion-compensated frame difference map 24 are derived (26) from the motion field M_F from color frame 21 to color frame 22, an additional piece of information is used to help the operator to understand such a dependency between the derived types of data and the input motion field M_F.

For example, in figure 2, such piece of information corresponds to a rectangular frame with texture comprising crosses, such rectangular frame surrounding the color frame 21, confidence/occlusion map 23 and the motion-compensated frame difference map 24.

Thus, the operator understands that the types of data corresponding to the confidence/occlusion map and the motion-compensated frame difference are derived from the motion field M_F from color frame 21 to color frame 22, and not from the motion field from color frame 22 to color frame 21, the color frame 22 being surrounded with a rectangular frame 27 with a different texture comprising circles instead of crosses.

According to another variant, such textures comprising crosses or circles are replaced by textures comprising other symbols (square, triangle) or with distinct colors such that green on the one hand and blue on the other hand.

Advantageously, the corresponding pointers (for example arrow) can be represented with the same texture as the one used for surrounding the frame/type of data where they are respectively moving.

Different pointers or signs can be considered in order to highlight the points of interest pointed by the operator. Actually, it is useful to have various ways to show correspondence in order to avoid disturbing occlusion by the form of the pointer.

For example, it can be useful to modify the orientation of the arrow. Or the arrow can be replaced by a small square, a circle or a cross.

All these features can be proposed in a user interface, implemented by the method according to the invention, to the operator who selects the most adequate one.

For example, in the case of the use of a mouse, a right click while moving the pointer in one of the frame of a video sequence provides access to the various forms of pointer or signs from which a new one can be selected.

The operator can move (by transparency) the pointer on any of the displayed data of the analysing image or he checks one of some small boxes assigned to the displayed data of an analysing image according to the invention, such checking of boxes permitting to indicate that one of the displayed data is a "current" image.

It has to noted that according to this example the "at least two types of data" of the invention correspond on the one hand to the motion-compensated frame difference map 24 and on the other hand to the merging 23 of a confidence map and an occlusion map forming a "confidence/occlusion" map where "dark grey" is assigned to pixels "occluded in the other frame", "light grey" is assigned to inconsistent motion vectors, i.e. such that the motion vector of a pointed pixel in the color frame 21 is not consistent with the corresponding reverse vector in the color frame 22.

In addition, the "pieces of information representing respectively" the confidence/occlusion map 23 and the motion-compensated frame difference map 24 are image (tables could also be used as a mean of representation) according to the analysing image of the invention as illustrated by figure 2.

Moreover, the analysing image of figure 2 comprises a piece of information representing a type of data, which is an indicator 25 of which the colour, the texture (horizontally hatched in figure 2) or the form indicates for example that the "tri-dimensional" point pointed by the arrow 210 (in other words a point of the scene defined by its tri-dimensional coordinates (x, y, z)) of a scene captured by the video sequence, or a region, is visible in both frames 21 and 22.

Indeed, the pointer (i.e arrow 230) corresponding to the arrow 210 moved by the operator points a white area in the image representing the confidence/occlusion map 34, a white area corresponding to pixels both visible in frames 21 and 22.

Such indicator helps the operator to analyse more quickly the data derived from the input motion field. Indeed by a simple glance on such indicator 25, the operator can evaluate if the fact that a pixel is occluded in one frame and visible in the other frame is true or not.

Thanks, to such an indicator, it is possible to display more types of data since the size of this indicator is smaller than an image or a table used for representing a type of data. Thus, the use of such indicator representing a data derived from an input motion field can help to display more derived data (for example two images representing two types of data and the indicator representing another type of data) to optimize the error detection.

One arrow (210) is moved by the operator on the color frame 21 and points at a "*current*" pixel of the color frame 21. Thanks to the invention, the other arrows (220, 230 and 240) are displayed simultaneously pointing out respectively to the corresponding values in the other frame color 22, in the confidence/occlusion maps (23) and in the motion-compensated frame difference (24).

In the right color frame 22, the arrow 220 (filled with a texture comprising circles or a predetermined color different from the one filling the left color frame 21) indicates the point corresponding to the current pixel displaced by its estimated motion vector.

Thus, in figure 2, three types of data corresponding to the confidence, the occlusion, and the motion-compensated frame difference and one indicator permitting the operator to detect at a glance abnormal deformations due to erroneous motion data.

As a consequence, in comparison with the prior art it is possible to detect error(s) more easily and more rapidly in the at least one input motion field with reliability, since the at least two types of data derived from the at least one input motion field are used in synergy.

Figure 3 illustrates another example of analysing image 300, which could be obtained according to the invention.

Like in figure 2, the two color frames 31, 32 (corresponding for example to the first and the sixth frames of a video sequence) are represented on the upper row of the analysing image 300 of figure 3. The motion field M_F is estimated between these two color frames 31, 32 and corresponds to both the motion field from the color frame 31 to the color frame 32 (forward motion field) and to the motion field from frame 32 to frame 31 (backward motion field).

Starting from such motion field M_F corresponding to both motion fields, two confidence/occlusion map 33 and 34 are respectively determined and displayed at the bottom row of the analysing image 300. It can be useful to display forward and backward occlusion maps together with the color frames as represented in figure 3.

To illustrate the dependency between these confidence/occlusion maps and the motion field from which they are derived, a rectangular frame (36) with a texture comprising crosses surrounds the color frame 31 and the corresponding occlusion map 36 derived from the motion field from color frame 31 to color frame 32, whereas a rectangular frame (37) with a texture comprising circles surrounds the color frame 31 and the corresponding occlusion map 36 derived from the motion field from color frame 32 to color frame 31.

When an arrow 320 is for example moved by the operator on the color frame 32, it points at the location of a pixel. The bottom arrow 340 indicates the pixel with the same coordinates in the corresponding information representing a confidence/occlusion map 34. The operator can then choose to move any of the arrows 320 or 340.

The indicator 35 of which the texture is vertically hatched in figure 3 (contrary to the horizontally hatched texture of figure 2), indicates that the "tri-dimensional" point pointed by the arrow 320 (in other words a point of the scene defined by its tri-dimensional coordinates (x, y, z)) of a scene captured by the video sequence, or a region, is visible in frame 32 and occluded in the other frame 31.

Indeed, the pointer (i.e arrow 340) corresponding to the arrow 320 moved by the operator points a dark grey area in the image representing the confidence/occlusion map 34, a dark grey area corresponding to "tri-dimensional" point occluded in frame 32. Thus in figure 3, no other arrows (pointers) are automatically displayed in the color frame 31 or in the image representing the confidence/occlusion map 33.

Such indicator 35 helps the operator to analyse the motion field since it simply indicates using a color (green/red) or a texture (horizontally/vertically hatched) that a pixel pointed by the operator in one frame 32 is occluded in the other frame 31.

Figure 4 illustrates another example of analysing image 300, which could be obtained according to the invention.

Like in figures 2 and 3, the two color frames 41, 42 (corresponding for example to the first and the sixth frames of a video sequence) are represented on the upper row of the analysing image 400 of figure 4.

The motion field M_F is estimated between these two color frames 41, 42 and corresponds only to the motion field from the color frame 41 to the color frame 42 (forward motion field).

Starting from such motion field M_F from the color frame 41 to the color frame 42, the colorized motion field map 43 and the motion-compensated frame difference map 44, both assigned (i.e derived from the motion field starting from the color frame 41 to the color frame 42) to the upper left color frame 41 are determined and displayed at the bottom row of the analysing image 400.

To illustrate the dependency between these motion-compensated color difference and motion-compensated frame difference maps and the motion field from which they are derived, a rectangular frame (46) with a texture comprising crosses surrounds the color frame 41 and the corresponding occlusion map 46 derived from the motion field from color frame 41 to color frame 42, whereas a rectangular frame (47) with a texture comprising circles surrounds the color frame 41 and the corresponding occlusion map 46 derived from the motion field from color frame 42 to color frame 41.

Thus, figure 4 gathers the color frames 41 and 42 and two different images representing data directed derived and illustrating the input motion field in comparison with confidence or occlusion data which requires more computations to be obtained.

Motion quality cannot be accurately evaluated via the analysing image 400 since the occlusion, or confidence analysis tracks are not exploited but large errors can be easily detected and the colorized motion field map 43 and the motion-compensated frame difference map 44 are fast determined 11 in comparison the occlusion or confidence types of data.

In addition, these large errors can be corrected directly on the depicted motion field by the operator, who selects a bad area (52 in figure 5) to then automatically (or semiautomatically) correct it via inpainting by indicating (128 in figure 1), as a piece of information *id_error* identifying an error in the input motion field, a correct reference area with a similar motion in the field.

Once such an analysing image (400) is displayed (124) simultaneously with at least one pointer (420) and (430) together with the arrow 410 representing a pixel location, the operator can see a bad correspondence either looking at the position of the arrow 420 whose texture comprises circles in color frame 42 compared with the arrow 410 whose texture comprises crosses in the left input color frame 41, a different point of the dress of the women being pointed in the two frames 41 and 42, or looking at the location of the arrow 430 in the image representing a colorized motion field map 43 that shows using an arrow 430 a blotch 431, or looking at the location of the arrow 440 in in the motion-compensated frame difference map where large errors are shown.

Taking into account all the data comprised in the analysing image, it is possible for the operator to correct the correspondence on a pixel basis, or to modify a whole area 52 as described in the following in relation with figure 5.

Such piece of information *id_error* identifying (and/or correcting) an error in the input motion field is then taken into account for an automatic correcting post-processing (13) of the motion field.

Indeed, referring to Figure 4, as the operator identifies an erroneous area in (for example) the motion field, he can select directly the wrong area in the motion field or he can select it in the corresponding color image. This latter option is useful in particular when the error makes a motion discontinuity corresponding to an object boundary disappear.

In this case, the area to be corrected (and in particular object boundary) can be better identified in the color frame 51 of Figure 5. The area (52) of interest is highlighted in the frames corresponding to the selected time instant (frames surrounded with a rectangular frame 46 with a different texture comprising crosses in Figure 4), such area corresponding to the outline (or contour) of the women in the color frame 51 for example.

This area (52) can then be adjusted from any frame corresponding to this time instant: e.g. via inpainting, or by selecting a point in frame 51 and its corresponding point in the other frame taken into account for obtaining the colorized motion field map 53, the dependency between the derived colorized motion field map 53 and the input motion field from frame 51 to other frame (not represented) corresponds to a rectangular frame (54) with texture comprising crosses, such rectangular frame surrounding the color frame 51, and the colorized motion field map 53.

In this latter case, several points can be provided with a correspondence by the operator. Then, the motion field of the whole selected area is interpolated from these operator's data.

According to another variant, the operator can select an area in the occlusion map and set it to "visible" or "occluded in the other frame" via a click on the visibility indicator (25, 35, 45), whose texture is as a consequence modified from an horizontally hatched to a vertically hatched texture. Such an action of the operator corresponds to the step 128 of figure 1 consisting in entering piece of information *id_error* identifying (and/or correcting) an error in the input motion field.

### 5.3 Correcting a motion estimation for at least three frames of a video sequence

As depicted above, when considering motion fields that link a reference frame to the other frames of the sequence, to make the analysis of the motion fields of at least three frames of a video sequence or of all frames of the video sequence faster, the operator can select an area (52) instead of a point.

This area can be highlighted via its contour or via a particular texture superimposed to the selected image window. Either the contour or the texture is propagated along the motion. The observation of the resulting sequence allows the operator to evaluate the motion quality.

Two modes can be considered in this context:

- the analysis of the motion fields of the frames with respect to the reference frame where the texture can be propagated along motion via bilinear interpolation
- the analysis of the motion fields of the reference frame with respect to the other frames where a contour pixel in the reference frame can be propagated by assigning the contour label to the pixel close to the corresponding point in the current frame.

Using for example the analysing image display modes depicted in figures 2 or 5, where the input motion field is limited to only one motion field, the operator can fix a frame and a point in this frame. He can then rapidly display by moving for example a cursor (not represented) the other frames of the sequence and look at the corresponding point. He can thus rapidly detect an error.

In addition, in the case of the motion fields of the reference frame with respect to the other frames, the operator can display the motion compensated frames registered with respect to the reference frame. It provides a sequence that should be stationary except the possible appearance of occlusions. The operator can easily detect at a glance the abnormal deformations due to erroneous motion data. In the same way, he can observe the occlusion maps, gain maps and motion-compensated difference maps of the reference frame with respect to the other frames, which should evolve slowly in most cases.

Thus, thanks to the invention it is provided an easy way to detect problems.

The confidence on motion vectors can be used to define a global motion quality for each frame. The global value can be used to order the frames according to quality. This can then help the operator in scanning the sequence and paying attention first to the frames with the worst quality value.

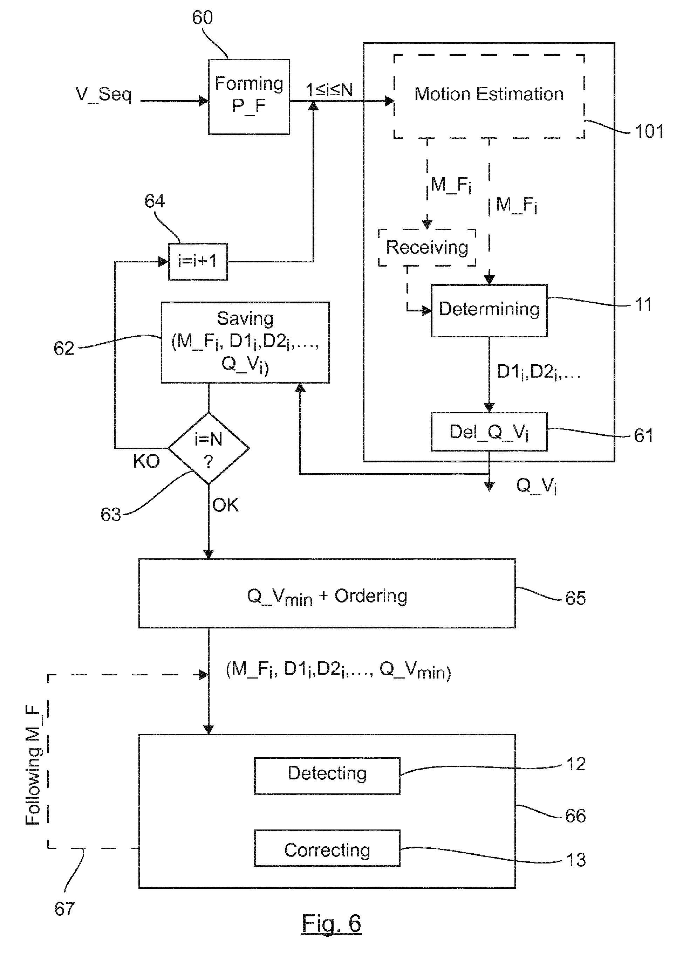

An embodiment dedicated to this particular aspect is illustrated by figure 6 where starting from a video sequence V_Seq a step of forming a pair of frames P_F is performed, said pair of frames comprising two successive frames of said video sequence, or said pair of frames comprising a reference frame and one other frame of said video sequence.

Then, said step of determining 11 at least two types of data $D_{1i}$, $D_{12i}$ corresponding to a quality assessment of said at least one input motion field, of figure 1, is performed for all pairs (63) of frames that can be formed in said video sequence, delivering (61) $Del\_Q\_V_i$, for each pair, a quality value $Q\_V_i$ of the at least one input motion field $M\_F_i$ indexed by an index i such that $1 \leq i \leq N$, (where N is the number of motion fields for which the quality is assessed).

For each input motion field $M\_F_i$ of a pair of frames P_ $F_i$, the at least two types of data $D_{1i}$, $D_{12i}$ and quality value $Q\_V_i$ are associated (forming for example 5-tuples when only the motion field $M\_F_i$, the pair of frames P_ $F_i$, the quality value $Q\_V_i$ and the at least two types of data $D_{1i}$, $D_{12i}$ are considered) and saved (62) before the index i is incremented (64) for processing the next pair of frames P_ $F_i$.

If the motion field $M\_F_i$ correspond to both forward and backward motion field between each frame of the pair of frames, a global the quality value $Q\_V_i$ is computed using an average or weighting between the forward and backward motion fields comprised in the motion field $M\_F_i$.

Then all the pairs of frames that can be formed (60) are ordered (65) from the one presenting the lowest quality value $Q\_V_{min}$ to the one presenting the highest quality value, and said detecting (12) and correcting (13) (of figure 1) are then applied (66) at least first on the pair of frames presenting the lowest quality value $Q\_V_{min}$.

Then the other pairs of frames are also processed (67) following the ascending order (65). It is possible to consider that if the quality value $Q\_V_i$ exceeds a predetermined threshold, the associated motion field $M\_F_i$ of the pair of frames P_ $F_i$ is not corrected by the method according to the invention, which permits to save time to process all the video sequence.

*5.4 Global Structures of a device for correcting a motion estimation between at least two frames of a video sequence from at least one input motion field between said at least two frames*

Finally, figure 7 presents a simplified structure of a device for correcting a motion estimation between at least two frames of a video sequence from at least one input motion field between said at least two frames according to the invention.

Regarding figure 7, a device for correcting a motion estimation between at least two frames of a video sequence from at least one input motion field between said at least two frames, according to the invention, comprises a memory 71 comprising a buffer memory RAM, a processing unit 72 equipped for example with a microprocessor μP and driven by the computer program 73 implementing the method for correcting a motion estimation between at least two frames of a video sequence from at least one input motion field between said at least two frames according to the invention.

At initialization, the code instructions of the computer program 73 are for example loaded into a RAM and then executed by the processor of the processing unit 72.

According to the invention, the microprocessor of the processing unit 72 implements the steps of the method for correcting a motion estimation between at least two frames of a video sequence from at least one input motion field between said at least two frames described here above according to the instructions of the computer program 73. To this end, the device for correcting a motion estimation between at least two frames of a video sequence from at least one input motion field between said at least two frames, comprises a module for determining (74) at least two types of data DET_DAT, each corresponding to a distinct quality assessment of said at least one input motion field, from said at least one input motion field and said at least two frames, a module D_ERROR for detecting (75) at least one error in said at least one input motion field, comprising a module A (751) for analysing simultaneously said two frames together with at least two pieces of information representing respectively said at least two types of data, and delivering at least one piece of information identifying said error in said at least one input motion field, a module CORR for correcting (76) said at least one input motion field by taking into account said at least one piece of information identifying an error in said at least one input motion field.

Theses modules are controlled by the microprocessor of the processing unit 73.

**Claims**

1. A method for correcting a motion estimation between at least two frames of a video sequence, from at least one input motion field $M\_F$ between said at least two frames, wherein said method comprises also:

- from said at least one input motion field *M_F* and said at least two frames, determining (11) at least two types of data D1, D2, each corresponding to a distinct quality assessment of said at least one input motion field,

- detecting (12) at least one error *E* in said at least one input motion field *M_F,* by analysing (120) simultaneously said two frames together with at least two pieces of information representing respectively said at least two types of data, and delivering at least one piece of information identifying said error in said at least one input motion field,

- correcting (13) said at least one input motion field by taking into account said at least one piece of information identifying an error in said at least one input motion field.

2. The method for correcting a motion estimation between at least two frames of a video sequence according to claim 1, wherein said at least two types of data belong to the group comprising at least:

- a dense motion map,
- an occlusion map,
- a confidence map of said at least one input motion field,
- a motion compensated frame difference map,
- a color gain map,
- a color-gain-compensated frame map,
- a color-gain-compensated color difference map.

3. The method for correcting a motion estimation between at least two frames of a video sequence according to claims 1 or 2, wherein said method comprises a preliminary motion estimation (101) delivering said at least one input motion field corresponding to both a forward and a backward motion fields between said at least two frames.

4. The method for correcting a motion estimation between at least two frames of a video sequence according to anyone of the preceding claims, wherein said analysing comprises at least:

- obtaining (121) an analysing image (200, 300, 400) formed by said two frames together with said at least two pieces of information representing respectively said at least two types of data,
- displaying (122) said analysing image,
- receiving (123) a piece of information representing a location of at least one pixel in one of said two frames of said analysing image, and displaying (124) simultaneously at least one pointer and said piece of information representing a pixel location, both superposed on said analysing image,

- receiving (125) said at least one piece of information identifying said error in said at least one input motion field obtained by taking into account said at least one pointer and said piece of information representing a pixel location, both superposed on said analysing image.

5. The method for correcting a motion estimation between at least two frames of a video sequence according to claim 4, wherein said piece of information representing a location of at least one pixel defines an area (52) comprising a group of pixels in one of said two frames, called a selected frame (51), and wherein said displaying (124) simultaneously at least one pointer and said piece of information representing a pixel location, both superposed on said analysing image, displays also by superposition, a corresponding contour or a corresponding predetermined texture of said area on the other frame and/or on said at least two pieces of information representing respectively said at least two types of data.

6. The method for correcting a motion estimation between at least two frames of a video sequence according to claim 5, wherein said method comprises propagating a corresponding contour or texture of said area (52) in at least two other frames of said video sequence, and displaying said selected frame and said at least two other frames of said video sequence together with their respective contour or texture.

7. The method for correcting a motion estimation between at least two frames of a video sequence according to claim 6, wherein said propagating implements a bilinear interpolation or, starting from a pixel presenting a predetermined texture of said selected frame of said two frames or starting from a contour pixel of said selected frame of said two frames, by assigning respectively said predetermined texture or a contour label to a pixel close to a corresponding point in the other frame of said two frames.

8. The method for correcting a motion estimation between at least two frames of a video sequence according to anyone of the claims 4 to 6, wherein said obtaining an analysing image inserts at least one additional piece of information (26, 27, 36, 37, 46, 47) representing a dependency between at least one of said two other data and one of said two frames.

9. The method for correcting a motion estimation between at least two frames of a video sequence according to anyone of the claims 4 to 7, wherein said displaying (124) a piece of information representing a location of at least one pixel comprises modifying said piece of information representing a location of at least one pixel when its superposition on said analysing image hides a point of interest of said analysing image.

10. The method for correcting a motion estimation between at least two frames of a video sequence according to anyone of the preceding claims, wherein said at least two frames form a pair of frames *P_F,* said pair of frames comprising two successive frames of said video sequence, or said pair of frames comprising a reference frame and one other frame of said video sequence.

11. The method for correcting a motion estimation between at least two frames of a video sequence according to claim 10, wherein said determining at least two types of data corresponding to a quality assessment of said at least one input motion field is performed for all pairs of frames that can be formed (60) in said video sequence, delivering (61) for each pair a quality value $Q\_V_i$ of the at least one input motion field, said pairs of frames being then ordered from the one presenting the lowest quality value to the one presenting the highest quality value,
and wherein said detecting (12) and correcting (13) are applied at least first on the pair of frames presenting the lowest quality value.

12. The method for correcting a motion estimation between at least two frames of a video sequence according to claim 2, wherein said method comprises merging (130) said type of data corresponding to an occlusion map and said type of data corresponding to a confidence map, delivering a merged data corresponding to a "confidence/occlusion" map.

13. A device for correcting a motion estimation between at least two frames of a video sequence from at least one input motion field between said at least two frames,
wherein said device comprises also:

- a module (74) for determining at least two types of data, each corresponding to a distinct quality assessment of said at least one input motion field, from said at least one input motion field and said at least two frames.
- a module (75) for detecting at least one error in said at least one input motion field, comprising a module (751) for analysing simultaneously said two frames together with at least two pieces of information representing respectively said at least two types of data, and delivering at least one piece of information identifying said error in said at least one input motion field,
- a module (76) for correcting said at least one input motion field by taking into account said at least one piece of information identifying an error in said at least one input motion field.

14. A computer program product downloadable from a communication network and/or recorded on a medium readable by computer and/or executable by a processor, comprising program code instructions for implementing a method for correcting a motion estimation between at least two frames of a video sequence, from at least one input motion field between said at least two frames,
wherein said method comprising:

- from said at least one input motion field and said at least two frames, determining at least two types of data, each corresponding to a distinct quality assessment of said at least one input motion field,
- detecting at least one error in said at least one input motion field, by analysing simultaneously said two frames together with at least two pieces of information representing respectively said at least two types of data, and delivering at least one piece of information identifying said error in said at least one input motion field,
- correcting said at least one input motion field by taking into account said at least one piece of information identifying an error in said at least one input motion field.

15. A non-transitory program storage device, readable by a computer, tangibly embodying a program of instructions executable by the computer to perform a method for correcting a motion estimation between at least two frames of a video sequence, from at least one input motion field between said at least two frames,
wherein said method comprising:

- from said at least one input motion field and said at least two frames, determining at least two types of data, each corresponding to a distinct quality assessment of said at least one input motion field,
- detecting at least one error in said at least one input motion field, by analysing simultaneously said two frames together with at least two pieces of information representing respectively said at least two types of data, and delivering at least one piece of information identifying said error in said at least one input motion field,
- correcting said at least one input motion field by taking into account said at least one piece of information identifying an error in said at least one input motion field.

_Fig. 1_

Fig. 2

Fig. 3

Fig. 4

Fig. 5

Fig. 7

Fig. 6

Europäisches
Patentamt

European
Patent Office

Office européen
des brevets

# EUROPEAN SEARCH REPORT

Application Number

EP 14 30 6173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/129015 A1 (NGUYEN TRUONG [US] ET AL) 2 June 2011 (2011-06-02) | 1-3, 10-15 | INV. H04N19/513 H04N19/162 H04N19/553 G06T7/20 H04N5/14 |
| Y | * paragraph [0020] - paragraph [0054]; figure 1 * * paragraph [0076] - paragraph [0083] * | 4-9 | |
| Y,D | KAI RUHL ET AL: "Improving dense image correspondence estimation with interactive user guidance", PROCEEDINGS OF THE 20TH ACM INTERNATIONAL CONFERENCE ON MULTIMEDIA, MM '12, 1 January 2012 (2012-01-01), page 1129, XP055158257, New York, New York, USA DOI: 10.1145/2393347.2396400 ISBN: 978-1-45-031089-5 * the whole document * | 4-9 | |
| A | US 8 718 328 B1 (GADDY WILLIAM L [US] ET AL) 6 May 2014 (2014-05-06) * line 46 - column 12, line 45; figures 4-7 * | 1-15 | |
| A | US 2014/169471 A1 (HE HELIX [CN]) 19 June 2014 (2014-06-19) * paragraph [0089] - paragraph [0098]; figures 7,8 * | 1-15 | TECHNICAL FIELDS SEARCHED (IPC) H04N G06T |
| A,D | KLOSE F ET AL: "Flowlab - An Interactive Tool for Editing Dense Image Correspondences", VISUAL MEDIA PRODUCTION (CVMP), 2011 CONFERENCE FOR, IEEE, 16 November 2011 (2011-11-16), pages 59-66, XP032074518, DOI: 10.1109/CVMP.2011.13 ISBN: 978-1-4673-0117-6 * section [2 Workflow] * | 1-15 | |

The present search report has been drawn up for all claims

| Place of search | Date of completion of the search | Examiner |
|---|---|---|
| The Hague | 14 January 2015 | Georgiou, Georgia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 14 30 6173

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2015

| Patent document cited in search report | | Publication date | Patent family member(s) | | Publication date |
|---|---|---|---|---|---|
| US 2011129015 | A1 | 02-06-2011 | US 2011129015 A1 | | 02-06-2011 |
| | | | WO 2009032255 A2 | | 12-03-2009 |
| US 8718328 | B1 | 06-05-2014 | US 8718328 B1 | | 06-05-2014 |
| | | | US 2014241582 A1 | | 28-08-2014 |
| | | | WO 2014133597 A1 | | 04-09-2014 |
| US 2014169471 | A1 | 19-06-2014 | CN 103888776 A | | 25-06-2014 |
| | | | DE 102013114082 A1 | | 26-06-2014 |
| | | | US 2014169471 A1 | | 19-06-2014 |

For more details about this annex : see Official Journal of the European Patent Office, No. 12/82

## REFERENCES CITED IN THE DESCRIPTION

**Non-patent literature cited in the description**

- **CRIMINISI et al.** Region filling and object removal by exemplar-based image inpainting. *IEEE Transactions on Image Processing,* September 2004, vol. 13 (9), 1200-1212
- **F. KLOSE.** Flowlab - an interactive tool for editing dense image correspondences. *Conference for Visual Media Production,* 16 November 2011, 59-66
- **K. RUHL et al.** Improving dense image correspondence estimation with interactive user guidance. *Proceedings of the 20th ACM international conference on Multimedia,* 1129-1132